# EUROPÄISCHE PATENTSCHRIFT

(11) **EP 1 468 199 B1**
(45) Veröffentlichungstag und Bekanntmachung des Hinweises auf die Patenterteilung: **27.09.2006**
(21) Anmeldenummer: 03731675.9
(22) Anmeldetag: 20.01.2003
(51) Int. Cl.: F16B 41/00, F16B 37/00

(54) **STÜTZHÜLSE**
SUPPORTING BUSHING
CHEVILLE

(30) Priorität: 22.01.2002 DE 10202267
(43) Veröffentlichungstag der Anmeldung: 20.10.2004
(73) Patentinhaber: EJOT GmbH & Co. KG, 57334 Bad Laasphe (DE)
(72) Erfinder: PINZL, Wilfried, 99897 Tambach-Dietharz (DE)
(74) Vertreter: Bardehle, Heinz
(86) Internationale Anmeldenummer: PCT/EP2003/000501
(87) Internationale Veröffentlichungsnummer: WO 2003/062653

(56) Entgegenhaltungen:
- AT-B- 137 468
- DE-A- 19 534 034
- GB-A- 636 858
- GB-A- 908 912
- US-A- 6 059 503

## Beschreibung

Die Erfindung bezieht sich auf eine in einen Durchbruch eines Bauteils einbringbare Stützhülse, deren Loch zur Befestigung des Bauteils an einem Träger von einem in den Träger einsetzbaren Befestigungsstift, insbesondere einer Schraube, durchsetzt wird, wobei die von dem Kopf des Befestigungsstiftes und dem Träger auf das Bauteil ausgeübten axialen Kräfte von der Stützhülse aufgefangen werden.

Eine derartige Stützhülse ist in der DE-A-195 34 034 offenbart. Die Stützhülse dient dazu, in den Durchbruch eines Bauteils eingesetzt zu werden und eine Schraube aufzunehmen, mit der das Bauteil an einem Träger angeschraubt wird. Die dabei von dem Kopf der Schraube und dem Träger auf das Bauteil ausgeübten Kräfte werden von der Stützhülse aufgefangen, die in dem Durchbruch des Bauteils fest verankert angeordnet ist und damit ein ggf. empfindliches Material des Bauteils gegen von der Schraube ausgeübte zu starke Druckkräfte schützt. Um dabei der Stützhülse eine gewisse radiale Flexibilität zu geben, mit der sich die Stützhülse in dem Durchbruch des Bauteils abstützt, ist die Stützhülse mit einem Längsschlitz versehen, der durch die von ihm ausgehende Federwirkung der Stützhülse deren Einsetzen in den Durchbruch des Bauteils erleichtert und in dem Durchbruch eine gewisse Klemmwirkung ausübt.

Damit die bekannte Stützhülse dem von einer Schraube ausgeübten Druck, also insbesondere dem Druck des Schraubenkopfes auf die betreffende Stirnseite der Stützhülse, ausreichend standhalten kann, muss die Stützhülse eine relativ große Wandstärke besitzen, die aber zur Folge hat, dass die Stützhülse trotz ihres Schlitzes keine besonders große Elastizität besitzt. Die große Wandstärke lässt ein Zusammendrücken der Stützhülse nur bei Anwendung von relativ hohen radial wirkenden Kräften zu.

Es ist weiterhin aus der britischen Patentschrift GB-A-636,858 ein Dübel bekannt, der von einer mit mehreren axial verlaufenden Einbuchtungen versehenen Hülse gebildet ist. Die Einbuchtungen bestehen aus Einknickungen, deren Wände sich am Grund der Einknickung treffen. Dieser bekannte Dübel ist nicht als Stützhülse gebildet und verwendet, als eingesetzter Dübel dient er dazu, einen sicheren Sitz in einem vorbereiteten Loch in einer Wand zu bieten und seine Drehung beim Einsetzen und Einschrauben einer Schraube zu verhindern.

Der Erfindung liegt die Aufgabe zugrunde, eine Stützhülse zu schaffen, deren Gestaltung es zulässt, über einen erheblichen Spielraum die Federkraft der Spannhülse zu wählen, wobei die Aufnahme der von der Schraube ausgehenden Druckkräfte durch entsprechend großflächig gewählte Stirnflächen der Stützhülse ermöglicht wird.

Erfindungsgemäß geschieht dies dadurch, dass die im Querschnitt als geschlossener Ring ausgebildete Stützhülse mehrere, axial verlaufende, sich über die gesamte Länge der Stützhülse erstreckende Einbuchtungen aufweist, die durch radial nach innen gerichtete Wände und diese verbindende Böden gebildet sind, wobei bei radialem Zusammendrücken der Stützhülse bei deren Einsetzen in den Durchbruch unter Annäherung der Wände die Böden einbiegen.

Die Gestaltung der Stützhülse mit mehreren in ihrer Längsrichtung verlaufenden, durchgehenden Einbuchtungen führt zu einer entsprechenden Zahl von Böden dieser Einbuchtungen, die den Bereich der Stützhülse bilden, in dem das Material der Stützhülse gebogen werden kann. Eine günstige Gestaltung der Stützhülse ergibt sich dann, wenn diese mit vier Einbuchtungen versehen ist, so dass für das Einbiegen vier Böden zur Verfügung stehen, die der Stützhülse eine erhebliche Flexibilität geben. Selbstverständlich kann die Stützhülse auch mit drei oder sogar mit zwei Einbuchtungen versehen werden, jedoch nimmt natürlich die Flexibilität der Stützhülse mit der Zahl der Einbuchtungen zu, womit die Wahl der Elastizität der Stützhülse erfolgt. Aufgrund der Anordnung mehrerer Einbuchtungen ergibt sich jeweils auf der Stirnseite der Stützhülse ein linienartiger Verlauf des Querschnitts der Stützhülse, was in Radialrichtung zu einer entsprechenden Breite der Auflagefläche für den Kopf einer Schraube oder eines anderen Befestigungsstiftes dient. Das Gleiche gilt natürlich auch für die gegenseitige Stirnseite der Stützhülse, die dann bei Befestigung des Bauteils an einem Träger an diesem anliegt.

Bei dem Befestigungsstift kann es sich in erster Linie um eine Schraube handeln, es ist aber auch möglich, einen nagelartigen Stift zu verwenden, wenn mit dem führenden Ende des Nagels seine Befestigung in den Träger möglich ist.

Zweckmäßig werden die Einbuchtungen gleichmäßig über den Ring verteilt, so dass sich eine entsprechend gleichmäßige Verteilung der Elastizität der Stützhülse auf ihrem gesamten Umfang ergibt.

Um die Stützhülse unverlierbar mit dem Befestigungsstift zu verbinden, werden die Böden der Einbuchtungen zweckmäßig so gestaltet, dass diese an einem Ende der Stützhülse nach innen weisende Vorsprünge aufweisen. Aufgrund einer Erweiterung des Durchmessers des Befestigungsstiftes, insbesondere durch das Gewinde einer Schraube, bilden die Vorsprünge eine Verengung des Lochs der Stützhülse gegenüber einer Erweiterung des Durchmessers des Befestigungsstiftes, so dass eine in die Stützhülse eingeführte Schraube mit einem zwischen dem Kopf und dem Gewinde liegenden entsprechend langen Hals unverlierbar mit der Stützhülse verbunden ist. Um die Schraube in die Stützhülse einzubringen, wird diese entweder durch die Stützhülse hindurchgedrückt, wobei diese aufgrund ihrer Elastizität nachgibt, oder die Schraube wird einfach in das Loch der Stützhülse eingedreht, bis die Vorsprünge an den Böden der Einbuchtungen in den Bereich des Halses der Schraube gelangen.

Eine andere Art der unverlierbaren Verbindung von Stützhülse und Befestigungsstift besteht darin, auf den Befestigungsstift eine Lochscheibe zu schieben, die einerseits von der durch die Vorsprünge gebildeten Verengung und andererseits von der Erweiterung an dem Befestigungsstift aufgehalten wird, wobei es sich bei der Erweiterung, wie gesagt, insbesondere um ein Gewinde einer Schraube handeln kann.

Damit sich die Scheibe mühelos auf eine als Befestigungsstift dienende Schraube aufschieben lässt, gestaltet man die Öffnung der Lochscheibe zweckmäßig so, dass diese durch drei sich überlappende Kreisflächen bestimmt wird, deren Mittelpunkte auf einem Kreisbogen liegen, dessen Mittelpunkt mit der Stützhülsenachse zusammenfällt, wobei die drei Mittelpunkte der Kreisflächen auf dem Kreisbogen gleichmäßig verteilt sind. Es ergibt sich dabei eine kreisähnliche Öffnung der Lochscheibe mit drei symmetrisch zueinander liegenden kreisbogenförmigen Ausbuchtungen und stumpfwinklig zusammenlaufenden Schnittstellen der Kreisbögen, die als stumpfwinklige Ecken in die Öffnung der Lochscheibe hineinragen und damit einen Kreisring bestimmen, dessen Durchmesser kleiner ist als der Durchmesser der Erweiterung des Befestigungsstiftes bzw. des Gewindes der Schraube.

Vorteilhaft kann man die Einbuchtungen gegenüber den sie verbindenden Wülsten (also den radial außenliegenden Wandteilen der Stützhülse) geringfügig axial verlängern, was dazu führt, dass der Träger mit dem Befestigungsstift gegenüber dem Bauteil ggf. geringfügige Schwingungen ausüben kann, ohne dabei auf das Bauteil überzugreifen, da bei dieser Art der Verbindung die Verlängerungen der Einbuchtungen mit dem Träger fest verbunden sind, demgegenüber aber die das Bauteil tragenden Wülste dieses elastisch halten.

Um die Elastizität der Stützhülse weiterhin zu erhöhen, kann man die die Einbuchtungen verbindenden Wülste im Querschnitt so gestalten, dass diese ein durchgehendes Wellental bilden. In diesem Falle ergibt sich auch im Bereich des Wellentals eine gewisse Biegbarkeit der Wülste. Auf jeden Fall lässt sich damit eine Erhöhung der Elastizität des Bauteils gegenüber der Schraube erzielen.

Die Wände der Einbuchtungen kann man derart schräg zur Radialrichtung ausrichten, dass die Einbuchtungen jeweils gegenüber der Radialrichtung eine sich gleichmäßig wiederholende Schieflage aufweisen. Diese Schieflage kann man so legen, dass beim Anziehen einer als Befestigungsstift dienenden Schraube auf der dem Kopf der Schraube zugewandten Stirnseite der Stützhülse ein Mitnahmemoment entsteht, dem sich eine entsprechend schräg gestellte Wand entgegensetzt, wobei die Schräge so verläuft, dass die dabei auf die Stirnseite wirkenden Kräfte im Wesentlichen entlang der Richtung der betreffenden Wände verlaufen. Bei dieser Gestaltung können die Wände die auftretenden Reibungskräfte gut auffangen, womit verhindert wird, dass beim Anziehen einer Schraube sich die Stützhülse in sich selbst verdreht.

Die Stützhülse lässt sich vorteilhaft auch so ausbilden, dass die das Loch in der Stützhülse bestimmenden Einbuchtungen gegenüber dem als Schraube ausgebildeten Befestigungsstift ein solches Untermaß aufweisen, dass die Schraube bei ihrem Eindrehen in die Stützhülse ein Innengewinde einfurcht. In diesem Falle ergibt sich also ein besonderer Halt zwischen der Stützhülse und der Schraube über deren Gewinde.

Die Stützhülse kann insbesondere aus Metall gefertigt sein, es ist aber auch möglich, sie aus einem harten, elastischen Kunststoff zu spritzen. Beim Herstellen der Stützhülsen werden dann die Vorsprünge zur Sicherung einer Schraube entweder nach innen gedrückt oder durch entsprechende Gestaltung der Spritzform beim Spritzen mitgestaltet.

In den Figuren sind Ausführungsbeispiele der Erfindung dargestellt. Es zeigen:
- Figur 1a und b: die Stützhülse in perspektivischer Sicht und in Draufsicht;
- Figur 2a und b: eine Abwandlung der Stützhülse gemäß Figur 1 mit nach innen weisenden Vorsprüngen, und zwar in Draufsicht und im Schnitt;
- Figur 3: eine perspektivische Sicht der Stützhülse mit Einbuchtungen, die gegenüber den sie verbindenden Wülsten axial verlängert sind sowie mit jeweils einem Wellental in einem zwei Einbuchtungen verbindenden Wulst;
- Figur 4: eine Abwandlung der Stützhülse mit schräg zur Radialrichtung verlaufenden Wänden der Einbuchtungen;
- Figur 5: eine Zusammenstellung von Stützhülse und einem mittels der Stützhülse an einem Träger befestigten Bauteil;
- Figur 6: eine Stützhülse mit einer Lochscheibe zur unverlierbaren Verbindung von Stützhülse und Schraube;
- Figur 7: eine Ansicht der Lochscheibe;
- Figur 8: eine Zusammenstellung von Stützhülse und einem Träger mit Bauteil, bei der die Stützhülse ein Untermaß gegenüber dem Gewinde der Schraube besitzt.

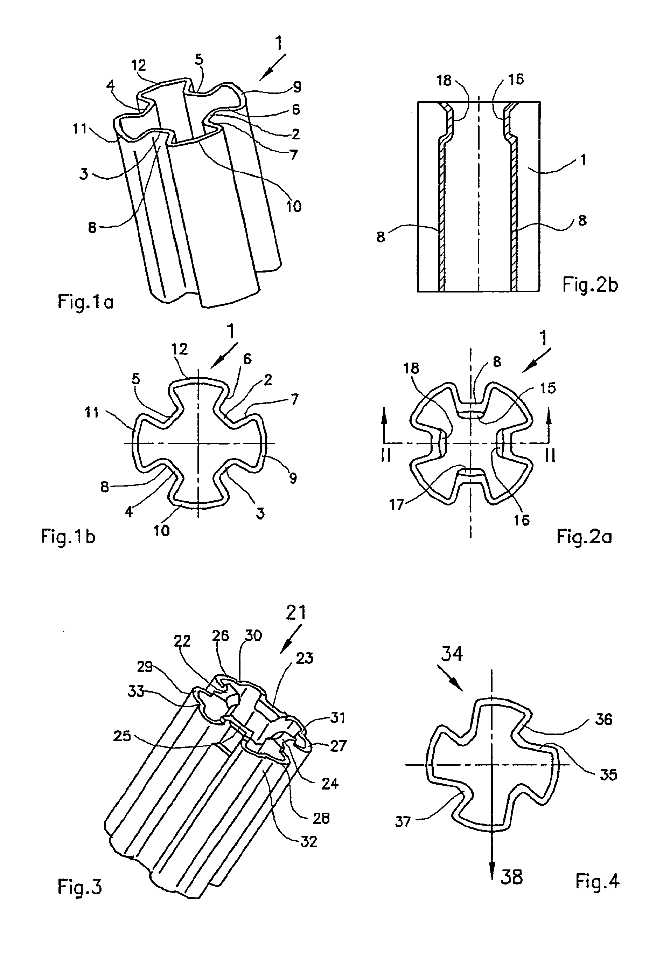

In der Figur 1a ist die Stützhülse 1 in perspektivischer Sicht dargestellt, die hier die vier Einbuchtungen 2, 3, 4 und 5 aufweist. Diese Einbuchtungen gehen auch aus der Draufsicht auf die Stirnseite der Stützhülse 1 gemäß Figur 1b deutlich hervor. Die Einbuchtungen werden jeweils durch die beiden Wände 6 und 7 sowie den Boden 8 gebildet. Zwischen den Einbuchtungen 2 bis 5 erstrecken sich die diese verbindenden Wülste 9, 10, 11 und 12.

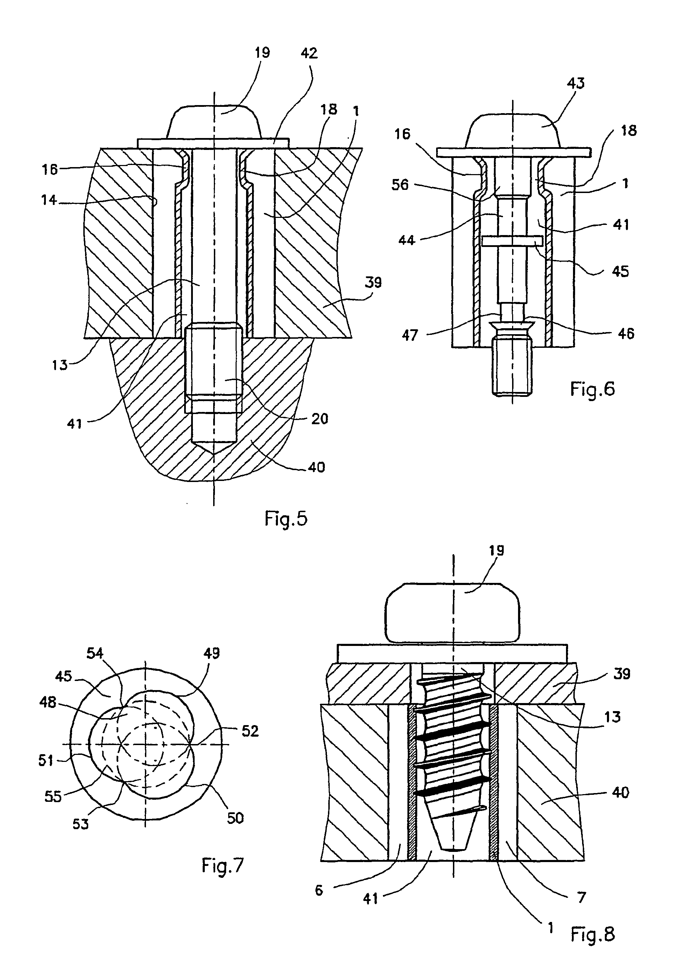

Diese Gestaltung der Stützhülse 1 gestattet es, diese aufgrund der federnden Nachgiebigkeit des Stützhülsenmaterials radial zusammenzudrücken und dabei in einen Durchbruch eines Bauteils einzuführen, dessen Durchmesser geringer ist als der Durchmesser der in den Figuren 1 a und b in entspannter Lage dargestellten Stützhülse. Beim radialen Zusammendrücken der Stützhülse 1 ergibt sich in erster Linie ein Einbiegen der Böden 8, wobei sich die Wände 6 und 7 einander annähern. Dies geschieht in gleichmäßiger Weise aufgrund des gleichmäßigen Aufbaus der Stützhülse bei allen vier Einbuchtungen 2 bis 5, womit sich eine erhebliche Elastizität der Stützhülse 1 erzielen lässt. Bezüglich der Einbringung der Stützhülse 1 und deren Funktion in einem Bauteil sei auf die weiter unten gegebenen Erläuterungen zu Figur 5 verwiesen. Aus Figur 5 ist zu ersehen, dass die dort dargestellte Stützhülse 1 eine Schraube 13 in ihren Durchbruch 14 aufnimmt.

Um eine solche Schraube unverlierbar mit der Stützhülse 1 zu verbinden, sind gemäß Figur 2a und b an den Böden 8 nach innen weisende Vorsprünge 15, 16, 17 und 18 vorgesehen, die, wie der Schnitt II-II aus Figur 2a deutlich zeigt, an der einen Seite der Stützhülse 1 angebracht sind. Diese auch in der Figur 5 dargestellten Vorsprünge 16 und 18 dienen dazu, die Schraube 13 daran zu hindern, dass sie in Richtung zu ihrem Kopf 19 aus der Stützhülse 1 herausgleiten kann. Hieran wird die Schraube 13 durch den Durchmesser ihres Gewindes 20 gehindert, dessen Durchmesser größer ist als der durch die Vorsprünge 16 und 18 (sowie 15 und 17 gemäß Figur 2a) gegebene Durchmesser.

Figur 3 zeigt eine Abwandlung der Gestaltung der Stützhülse 1 gemäß Figur 2a und b, nämlich die Stützhülse 21 in perspektivischer Sicht, die wie die Stützhülse 1 vier Einbuchtungen 22, 23, 24 und 25 aufweist. Diese Einbuchtungen mit ihren Böden und ihren Wänden sind axial etwas länger ausgebildet als die die Einbuchtungen 22 bis 25 verbindenden Wülste 26, 27, 28 und 29. Die gleiche Verlängerung der Einbuchtungen 22 bis 25 ist auf der nicht sichtbaren gegenüberliegenden Seite der Stützhülse 21 vorgesehen. Aufgrund dieser Verlängerungen stützt sich eine die Stützhülse 21 durchsetzende Schraube mit ihrem Schraubenkopf auf diese Verlängerungen und einen Träger ab (siehe Figur 5), was dazu führt, dass der von der Schraube ausgeübte Druck auf die Stützhülse 21 von den genannten Verlängerungen aufgefangen wird, die damit starr eingespannt sind. Demgegenüber verbleibt den Wülsten 26, 27, 28 und 29 eine gewisse Flexibilität, was bedeutet, dass ein die Stützhülse 21 aufnehmendes Bauteil, das die Stützhülse 21 fest umschließt, im Bereich einer Elastizität der genannten Wülste sich gegenüber den fest eingespannten Verlängerungen der Stützhülse 21 leicht bewegen kann.

Die Stützhülse 21 ist weiterhin im Bereich ihrer Wülste 26 bis 29 mit nach innen weisenden Wellentälern 30, 31, 32 und 33 versehen, die der Stützhülse 21 eine weitergehende Elastizität geben, da aufgrund der Wellentäler 30 bis 33 sich die Wülste 26 bis 29 ebenfalls etwas zusammendrücken lassen.

In der Figur 4 ist die Draufsicht auf die Stirnseite einer Stützhülse 34 dargestellt, bei der die Wände 35 und 36 der Einbuchtungen 37 schräg zur Radialrichtung verlaufen, die durch den eingezeichneten Pfeil 38 angedeutet ist. Die Schräglage der genannten Wände wiederholt sich bei allen vier Einbuchtungen der Stützhülse 34. Wenn auf diese Stützhülse ein Drehmoment in Uhrzeigerdrehrichtung ausgeübt wird (durch eine auf den Verlängerungen gemäß Figur 3 aufsitzende Schraube mit ihrem Schraubenkopf), dann stützt sich die Wand 36 gegen die Wandung des Durchbruchs im Bauteil ab und bietet auf diese Weise einen besonderen Widerstand gegen ein Verdrehen der Stützhülse 34 im Bauteil.

In der Figur 5 ist die oben bereits erwähnte Zusammenstellung von Stützhülse 1 mit Bauteil 39 und Träger 40 dargestellt. Die Stützhülse 1 ist in den Durchbruch 14 des Bauteils 39 eingedrückt. Durch das Loch 41 der Stützhülse 1 ist die Schraube 13 durchgesteckt, die sich gegen die Scheibe 42 unter dem Schraubenkopf 19 abstützt und bei ihrem Anziehen mit der Scheibe 42 auf die betreffende Stirnseite der Stützhülse 1 drückt. Das mit dem Gewinde 20 versehene Ende der Schraube 13 ist in den Träger 40 eingedreht und gegenüber diesem festgezogen, womit die Verbindung zwischen Bauteil 39 und Träger 40 hergestellt ist. Dabei bewirkt die Stützhülse 1 eine Entlastung des Bauteils 39 hinsichtlich der von der Schraube 13 ausgehenden Druckkräfte, so dass ein aus einem empfindlichen Material bestehendes Bauteil 39 nicht im Bereich der Scheibe 42 zusammengequetscht werden kann.

In der Figur 6 ist eine Variante der in der Figur 5 dargestellten Verbindung gezeigt, bei der die Schraube 43 im Bereich ihres Halses 44 die Lochscheibe 45 trägt. Die Lochscheibe 45 wird hinsichtlich ihrer Beweglichkeit auf dem Hals 44 an der Verdickung 56 der Schraube 43 gehindert, andererseits an dem aus dem Hals 44 herausgewalzten Bund 46. Durch diese Gestaltung wird verhindert, dass die Schraube 43 von der Stützhülse 1 getrennt werden kann. Das Herauswalzen des Bundes 46 erfolgt bei der Herstellung der Schraube 43 in einem Zustand, in dem die Lochscheibe 45 bereits von dem Hals 44 getragen wird. Bei diesem Herauswalzen des Bundes 46 entsteht die in der Figur 6 dargestellte Verjüngung 47 des Halses 44. Um die Schraube 46 mit der Lochscheibe 45 in die Stützhülse 1 von der Seite der Vorsprünge 16 und 18 in das Loch 41 der Stützhülse 1 einführen zu können, ist die Verdickung 56 vorgesehen, gegen die sich die Lochscheibe 45 anlegt, wenn die Schraube 43 in die Stützhülse 1 eingeführt wird.

Die Lochscheibe 45 ist vergrößert in Draufsicht in Figur 7 dargestellt. Die Öffnung 48 der Lochscheibe 45 wird hier durch drei gestrichelt gezeichnete, sich überlappende Kreisflächen definiert, deren kreisringförmige Ränder 49, 50 und 51 über die Ecken 52, 53 und 54 zusammenstoßen und damit die Öffnung 48 mit drei Ausbuchtungen bilden, in die jeweils der Hals 44 der Schraube 43 gemäß Figur 6 passt. Die Ecken 52, 53 und 54 liegen auf einem durch die strichpunktierte Linie angedeuteten Kreisbogen, dessen Durchmesser geringer ist als der Durchmesser der Schraube 43 im Bereich der Verdickung 56 bzw. der Durchmesser des Bundes 46. Aufgrund dieser Gestaltung der Öffnung 48 der Lochscheibe 45 ist es möglich, dass die Schraube 43 mit ihrem Hals 44 sich jeweils an die Ränder 49, 50 und 51 anlegt, womit also ein erhebliches Spiel zwischen der Schraube 43 und der Lochscheibe 45 gewährleistet ist. Dies hat zur Folge, dass der Träger, der die Lage der in ihn eingedrehten Schraube 43 definiert, dem am Träger befestigten Bauteil mit der Stützhülse 1 soviel Spiel gibt, wie dies durch die Ränder 49, 50 und 51 ermöglicht wird. Diese Art der Verbindung von unverlierbarer Schraube 43 zusammen mit der Stützhülse 1 sowie einem Bauteil und einem Träger (Bezugszeichen 39 und 40 gemäß Figur 5) gewährleistet damit den Ausgleich von erheblichen Toleranzen beim Zusammenbau von Bauteil und Träger unter Zuhilfenahme der Stützhülse 1.

In der Figur 8 ist eine Zusammenstellung von Stützhülse 1, dem Träger 40 und dem Bauteil 39 dargestellt, bei der die Schraube 13 in die Stützhülse 1 unter Einfurchen eines Innengewindes eingedreht ist, wozu die das Loch 41 in der Stützhülse 1 bestimmenden Einbuchtungen, von denen in der Figur 8 die Wände 6 und 7 zu sehen sind, gegenüber dem Gewinde der Schraube 13 ein entsprechendes Untermaß aufweisen. Damit ergibt sich eine besondere Befestigung der Schraube 13 in der Stützhülse 1 durch das in diese eingefurchte Innengewinde.

## Patentansprüche

1. In einen Durchbruch (14) eines Bauteils (39) einbringbare Stützhülse (1, 21, 34), deren Loch (41) zur Befestigung des Bauteils (39) an einem Träger (40) von einem in den Träger einsetzbaren Befestigungsstift, insbesondere einer Schraube (13, 43), durchsetzt wird, wobei die von dem Kopf des Befestigungsstifts (13, 43) und dem Träger (40) auf das Bauteil (39) ausgeübten axialen Kräfte von der Stützhülse (1, 21, 34) aufgefangen werden, **dadurch gekennzeichnet, dass** die im Querschnitt als geschlossener Ring ausgebildete Stützhülse (1, 21, 34) mehrere, axial verlaufende, sich über die gesamte Länge der Stützhülse (1, 21, 34) erstreckende Einbuchtungen (2, 3, 4, 5; 22, 23, 24, 25) aufweist, die durch radial nach innen gerichtete Wände (6, 7; 35, 36) und diese verbindende Böden (8) gebildet sind, wobei bei radialem Zusammendrücken der Stützhülse (1, 21, 34) bei deren Einsetzen in den Durchbruch (14) unter Annäherung der Wände (6, 7; 35, 36) die Böden (8) einbiegen.

2. Stützhülse nach Anspruch 1, **dadurch gekennzeichnet, dass** die Einbuchtungen (2, 3, 4, 5; 22, 23, 24, 25) gleichmäßig über den Ring verteilt sind.

3. Stützhülse nach Anspruch 1 oder 2, **dadurch gekennzeichnet, dass** zur unverlierbaren Halterung des Befestigungsstiftes (13) die Böden (8) der Einbuchtungen (2, 3, 4, 5; 22, 23, 24, 25) am einen Ende der Stützhülse (1, 21, 34) nach innen weisende Vorsprünge (15, 16, 17, 18) aufweisen.

4. Stützhülse nach Anspruch 3, **dadurch gekennzeichnet, dass** die Vorsprünge (15, 16, 17, 18) eine Verengung ihres Lochs (41) gegenüber einer Erweiterung des Durchmessers des Befestigungsstiftes (13), insbesondere dessen Gewindes (20), bilden.

5. Stützhülse nach Anspruch 4, **dadurch gekennzeichnet, dass** die Verengung eine von dem Befestigungsstift (43) geführte Lochscheibe (45) aufhält, die entgegengesetzt von der Erweiterung aufgehalten wird.

6. Stützhülse nach Anspruch 5, **dadurch gekennzeichnet, dass** die Öffnung (48) der Lochscheibe (45) durch drei sich überlappende Kreisflächen bestimmt wird, deren Mittelpunkte auf einem Kreisbogen (55) liegen, dessen Mittelpunkt mit der Stützhülsenachse zusammenfällt, wobei die drei Mittelpunkte der Kreisflächen auf dem Kreisbogen (55) gleichmäßig verteilt sind.

7. Stützhülse nach einem der Ansprüche 1 bis 6, **dadurch gekennzeichnet, dass** die Einbuchtungen (22, 23, 24, 25) gegenüber den sie verbindenden Wülsten (26, 27, 28, 29) geringfügig axial verlängert sind.

8. Stützhülse nach einem der Ansprüche 1 bis 8, **dadurch gekennzeichnet, dass** die die Einbuchtungen (22, 23, 24, 25) verbindenden Wülste (26, 27, 28, 29) im Querschnitt ein axial durchgehendes Wellental (30, 31, 32, 33) bilden.

9. Stützhülse nach einem der Ansprüche 1 bis 8, **dadurch gekennzeichnet, dass** die Wände (35, 36) der Einbuchtungen (37) derart schräg zur Radialrichtung (38) verlaufen, dass die Einbuchtungen (37) jeweils gegenüber der Radialrichtung (38) eine sich gleichmäßig wiederholende Schieflage aufweisen.

10. Stützhülse nach einem der Ansprüche 1 bis 9, **dadurch gekennzeichnet, dass** die das Loch (41) in der Stützhülse (1) bestimmenden Einbuchtungen (2, 3, 4, 5; 22, 23, 24, 25) gegenüber dem als Schraube (13) ausgebildeten Befestigungsstift ein solches Untermaß aufweisen, dass die Schraube (13) bei ihrem Eindrehen in die Stützhülse (1) ein Innengewinde einfurcht.

## Claims

1. Supporting sleeve (1, 21, 34) being introducible into a penetration (14) in a component (39), wherein, for the fixing of the component (39) on a carrier (40), the hole (41) of said supporting sleeve (1, 21, 34) is penetrated by a fixing pin, particularly a screw (13, 43), insertable into the carrier, wherein the axial forces applied by the head of the fixing pin (13, 43) and the carrier (40) on the component (39) are absorped by the supporting sleeve (1, 21, 34), **characterized in that** the supporting sleeve (1, 21, 34) is formed in cross section as a closed ring and comprises a plurality of axially extending recesses (2, 3, 4, 5; 22, 23, 24, 25), formed as radially inwardly facing walls (6, 7; 35, 36) and bases (8), connecting these walls, wherein during insertion into the penetration (14) when the supporting sleeve (1, 21, 34) is radially compressed, the bases (8) bent in as the walls (6, 7; 35, 36) come closer.

2. Supporting sleeve according to claim 1, **characterized in that** the recesses (2, 3, 4, 5; 22, 23, 24, 25) are uniformly distributed over the ring.

3. Supporting sleeve according to claim 1 or 2, **characterized in that** for captive holding of the fixing pin (13) the bases (8) of the recesses (2, 3, 4, 5; 22, 23, 24, 25) have inwardly pointing projections (15, 16, 17, 18) at one end of the supporting sleeve (1, 21, 34).

4. Supporting sleeve according to claim 3, **characterized in that** the projections (15, 16, 17, 18) form a constriction of the hole (41) in relation to a widening of the diameter of the fixing pin (13), particularly of its thread (20).

5. Supporting sleeve according to claim 4, **characterized in that** the constriction supports a washer (45) guided by the fixing pin (43), said washer (45) being supported on the opposite side by the widening.

6. Supporting sleeve according to claim 5, **characterized in that** the opening (48) of the washer (45) is determined by three circular areas overlapping each other, the center points of said circular areas laying on a circular arc (55) who's center point coincides with the axis of the supporting sleeve, the three center points of the circular areas being uniformly distributed on the circular arc (55).

7. Supporting sleeve according to anyone of claims 1 to 6, **characterized in that** the recesses (22, 23, 24, 25) are slightly axially elongated in comparison with the bulges (26, 27, 28, 29), which connect them.

8. Supporting sleeve according to anyone of claims 1 to 8, **characterized in that** the bulges (26, 27, 28, 29) connecting the recesses (22, 23, 24, 25) form in cross section an axially continuous wave-like valley (30, 31, 32, 33).

9. Supporting sleeve according to anyone of claims 1 to 8, **characterized in that** the walls (35, 36) of the recesses (37) extend obliquely with respect to the radial direction (38) in such a manner that the recesses (37) each have a uniformly repeating skew position in relation to the radial direction (38).

10. Supporting sleeve according to anyone of claims 1 to 9, **characterized in that** the recesses (2, 3, 4, 5; 22, 23, 24, 25) determining the hole (41) in the supporting sleeve (1) are of such an undersize in relation to the fixing pin in the form of the screw (13) that the screw (13) cuts an internal thread when being screwed into the supporting sleeve (1).

## Revendications

1. Douille porteuse (1, 21, 34) qui est insérable dans un passage (14) d'un élément de construction (39) et dont le trou (41) est traversé par une cheville de fixation, en particulier par une vis (13, 43), pouvant être logée dans un support (40) pour fixer l'élément de construction (39) au support, les forces axiales exercées sur l'élément de construction (39) par la tête de la cheville de fixation (13, 43) et par le support (40) étant absorbées par la douille porteuse (1, 21, 34), **caractérisée en ce que** la douille porteuse (1, 21, 34) offrant en coupe transversale la forme d'un anneau fermé comporte plusieurs renfoncements d'extension axiale (2, 3, 4, 5 ; 22, 23, 24, 25) qui s'étendent sur toute la longueur de la douille porteuse (1, 21, 34) et qui sont formés par des parois orientées radialement vers l'intérieur (6, 7 ; 35, 36) et par des fonds (8) reliant ceux-ci, les fonds (8) se pliant sur eux-mêmes par rapprochement des parois (6, 7 ; 35, 36) lorsque la douille porteuse (1, 21, 34) est comprimée radialement au moment de son insertion dans le passage (14).

2. Douille porteuse selon la revendication 1, **caractérisée en ce que** les renfoncements (2, 3, 4, 5 ; 22, 23, 24, 25) sont répartis à intervalles réguliers sur l'anneau.

3. Douille porteuse selon la revendication 1 ou 2, **caractérisée en ce que**, pour maintenir la cheville de fixation (13) captive, les fonds (8) des renfoncements (2, 3, 4, 5 ; 22, 23, 24, 25) comportent, à une extrémité de la douille porteuse (1, 21, 34), des saillies (15, 16, 17, 18) tournées vers l'intérieur.

4. Douille porteuse selon la revendication 3, **caractérisée en ce que** les saillies (15, 16, 17, 18) ont pour effet de rétrécir le trou (41) par rapport à un élargissement diamétral de la cheville de fixation (13), en particulier de son filetage (20).

5. Douille porteuse selon la revendication 4, **caractérisée en ce que** le rétrécissement retient une rondelle (45) qui est guidée par la cheville de fixation (43) et qui, à l'opposé, est retenue par l'élargissement.

6. Douille porteuse selon la revendication 5, **caractérisée en ce que** l'ouverture (48) de la rondelle (45) est définie par trois surfaces circulaires en chevauchement dont les points d'intersection se trouvent sur un arc de cercle (55) dont le centre coïncide avec l'axe de la douille porteuse, les trois points d'intersection des surfaces circulaires étant répartis à intervalles réguliers sur l'arc de cercle (55).

7. Douille porteuse selon une des revendications 1 à 6, **caractérisée en ce que** les renfoncements (22, 23, 24, 25) sont légèrement prolongés axialement par rapport aux bourrelets (26, 27, 28, 29) qui les relient.

8. Douille porteuse selon une des revendications 1 à 8, **caractérisée en ce que** les bourrelets (26, 27, 28, 29) reliant les renfoncements (22, 23, 24, 25) forment en coupe transversale un sillon axialement continu (30, 31, 32, 33).

9. Douille porteuse selon une des revendications 1 à 8, **caractérisée en ce que** les parois (35, 36) des renfoncements (37) s'étendent en biais par rapport à la direction radiale (38), de façon que les renfoncements (37) présentent chacun, par rapport à la direction radiale (38), une inclinaison répétée à intervalles réguliers.

10. Douille porteuse selon une des revendications 1 à 9, **caractérisée en ce que** les renfoncements (2, 3, 4, 5 ; 22, 23, 24, 25) définissant le trou (41) dans la douille porteuse (1) présentent une cote minorée par rapport à la cheville de fixation conformée en vis (13), de façon que la vis (13) creuse un taraudage dans la douille porteuse (1) en s'y engageant.
